# EUROPEAN PATENT APPLICATION

(11) **EP 4 311 118 A1**
(43) Date of publication of application: **24.01.2024**
(21) Application number: 22770408.7
(22) Date of filing: 11.03.2022
(51) Int. Cl.: H04B 7/00

(54) **TRANSMISSION METHOD AND APPARATUS, DEVICE, AND READABLE STORAGE MEDIUM**

(30) Priority: 16.03.2021 CN 202110281748
(71) Applicant: Vivo Mobile Communication Co., Ltd., Dongguan, Guangdong 523863 (CN)
(72) Inventor: ZHONG, Tingting, Dongguan, Guangdong 523863 (CN); XIE, Zhenhua, Dongguan, Guangdong 523863 (CN)
(74) Representative: Conti, Marco
(86) International application number: PCT/CN2022/080415
(87) International publication number: WO 2022/194053

(57) **Abstract**

This application discloses a transmission method and apparatus, a device, and a readable storage medium and pertains to the field of communication technologies. The transmission method in embodiments of this application includes: performing a first behavior in a case that a terminal interested in a first service is within a first area.

## Description

### CROSS-REFERENCE TO RELATED APPLICATIONS

This application claims priority to Chinese Patent Application No. 202110281748.3, filed in China on March 16, 2021, which is incorporated herein by reference in its entirety.

### TECHNICAL FIELD

This application pertains to the field of communication technologies, and specifically relates to a transmission method and apparatus, a device, and a readable storage medium.

### BACKGROUND

After a terminal (such as user equipment (User Equipment, UE)) in a radio resource control (Radio Resource Control, RRC) connected (Connected) state is released to a non-radio resource control connected (non-RRC Connected) state because of being temporarily not provided with local (Local) multicast and broadcast services (Multicast and Broadcast Services, MBS) service data of high quality of service (Quality of Service, QoS) (being suspended), the UE may move out of a service area of the local MBS service due to cell reselection, thereby missing notifications for resuming the local MBS service.

### SUMMARY

Embodiments of this application provide a transmission method and apparatus, a device, and a readable storage medium to solve the problem of UE being unable to continue to receive data after re-entering a service area of local MBS service due to cell selection.

According to a first aspect, a transmission method is provided, performed by a terminal and including:
performing a first behavior in a case that the terminal interested in a first service is within a first area; where
the first behavior includes at least one of the following:
   obtaining configuration information of the first service;
   entering an RRC connected state;
   sending non-access stratum (Non-Access-Stratum, NAS) signaling;
   sending an RRC message; and
   receiving data of the first service.

According to a second aspect, a transmission method is provided, performed by a network-side device and including:
sending first information to a terminal interested in a first service; where content in the first information includes at least one of the following:
indication of sending data of the first service;
indication of starting the first service;
indication of resuming the first service;
indication of not sending data of the first service;
indication of suspending the first service;
indication of stopping the first service;
indication of deleting the first service;
identifier of the terminal;
identifier of the first service;
session identifier; and
paging indication; where
the network-side device is a first network-side device.

According to a third aspect, a transmission apparatus is provided, applied to a terminal and including:
an execution module configured for the terminal interested in a first service to perform a first behavior within a first area; where
the first behavior includes at least one of the following:
   obtaining configuration information of the first service;
   entering an RRC connected state;
   sending NAS signaling;
   sending an RRC message; and
   receiving data of the first service.

According to a fourth aspect, a transmission apparatus is provided, applied to a network-side device and including:
a first sending module configured to send first information to a terminal interested in a first service; where
content in the first information includes at least one of the following:
   indication of sending data of the first service;
   indication of starting the first service;
   indication of resuming the first service;
   indication of not sending data of the first service;
   indication of suspending the first service;
   indication of stopping the first service;
   indication of deleting the first service;
   identifier of the terminal;
   identifier of the first service;
   session identifier; and
   paging indication; where
   the network-side device is a first network-side device.

According to a fifth aspect, a terminal is provided, including a processor, a memory, and a program stored in the memory and capable of running on the processor, where when the program is executed by the processor, the steps of the method according to the first aspect are implemented.

According to a sixth aspect, a terminal is provided, including a processor and a communication interface, where the processor is configured to implement the steps of the method according to the first aspect.

According to a seventh aspect, a network-side device is provided, including a processor, a memory, and a program stored in the memory and capable of running on the processor, where when the program is executed by the processor, the steps of the method according to the second aspect are implemented.

According to an eighth aspect, a network-side device is provided, including a processor and a communication interface, where the processor is configured to implement the steps of the method according to the second aspect.

According to a ninth aspect, a readable storage medium is provided, where the readable storage medium stores a program or instructions, and when the program or instructions are executed by a processor, the steps of the method according to the first aspect or the second aspect are implemented.

According to a tenth aspect, a computer program product is provided, where the computer program product is stored in a non-volatile storage medium, and the computer program product is executed by at least one processor to implement the steps of the processing method according to the first aspect or the second aspect.

According to an eleventh aspect, a chip is provided, where the chip includes a processor and a communication interface, the communication interface is coupled to the processor, and the processor is configured to run a program or instructions to implement the processing method according to the first aspect or the second aspect.

In the embodiments of this application, the terminal is capable of continuing to receive data of the first service after re-entering the service area of the first service, thereby achieving service continuity.

### BRIEF DESCRIPTION OF DRAWINGS

FIG. 1 is a block diagram of a wireless communication system to which embodiments of this application are applicable;
FIG. 2 is a first flowchart of a transmission method according to an embodiment of this application;
FIG. 3 is a second flowchart of a transmission method according to an embodiment of this application;
FIG. 4 is a first schematic diagram of a transmission apparatus according to an embodiment of this application;
FIG. 5 is a second schematic diagram of a transmission apparatus according to an embodiment of this application;
FIG. 6 is a schematic diagram of a terminal according to an embodiment of this application; and
FIG. 7 is a schematic diagram of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and" in the specification and claims represents at least one of connected objects, and the character "/" generally indicates that the contextually associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

For ease of understanding the embodiments of this application, the following technical points are first described.
1. Introduction to multimedia broadcast and multicast service (Multimedia Broadcast and Multicast Service, MBMS) or multicast broadcast service (Multicast Broadcast Service, MBS)

In a long term evolution (Long Term Evolution, LTE) system, an MBMS service may be transmitted in the following two modes.
(1) MBMS/MBS delivery mode 1: transmitted over a physical channel of a physical multicast channel (Physical Multicast Channel, PMCH) in an MBMS single frequency network (Multimedia Broadcast multicast service Single Frequency Network, MBSFN) subframe.
   Control information is transmitted in system information (for example, system information block (System Information Block, SIB)13) over a multicast control channel (Multicast Control Channel, MCCH), and data is transmitted over a broadcast traffic channel (Multicast Traffic Channel, MTCH).
(2) MBMS/MBS delivery mode 2: transmitted over a channel of a physical downlink shared channel (Physical Downlink Shared Channel, PDSCH) scheduled by a physical downlink control channel (Physical Downlink Control Channel, PDCCH).

Control information is transmitted in system information (for example, SIB20) over a single cell broadcast control channel (Single Cell Multicast Control Channel, SC-MCCH), and data is transmitted over a single cell broadcast traffic channel (Single Cell Multicast Traffic Channel, SC-MTCH). The SC-MCCH is transmitted by using a PDSCH scheduled by a single cell (Single Cell, SC)-radio network temporary identity (Radio Network Temporary Identity, RNTI) PDCCH, and the SC-MTCH is transmitted by using a PDSCH scheduled by a group radio network temporary identity (Group RNTI, G-RNTI) PDCCH.

### 2. Introduction to local MBS service

In the new radio (New Radio, NR) MBS, various types and characteristics of MBS services are supported, and local MBS service is one of them. Local MBS service refers to multicast or broadcast communication services that may be available only in the local service area (such as per (per) cell, tracking area (Tracking Area, TA), or other geographical metrics) and a specified time (such as during event time, emergency situations, or operating time) for vehicle-to-everything (vehicle to everything, V2X), public safety, and other locally provided services. Therefore, once a terminal moves out of a local service area of the local MBS service, the terminal is unable to access that local MBS service.

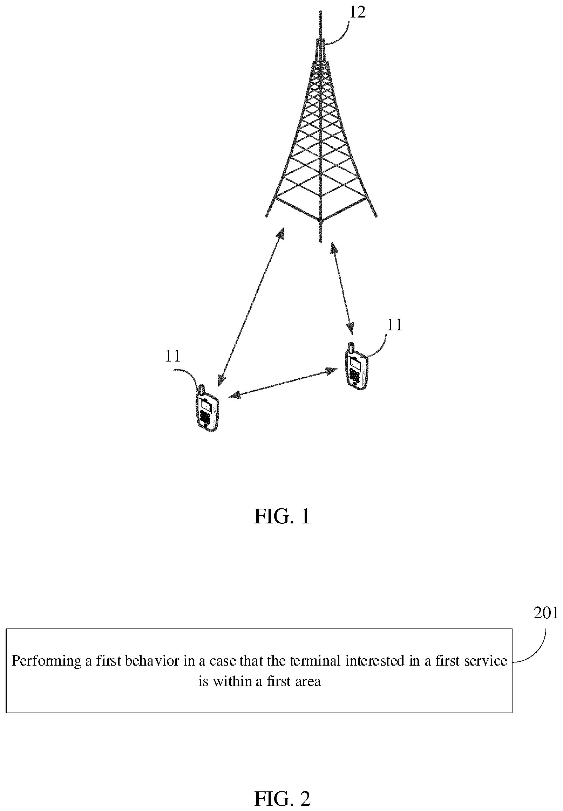

Referring to FIG. 1, FIG. 1 is a block diagram of a wireless communication system to which embodiments of this application are applicable. The wireless communication system includes a terminal 11, a network-side device 12, and an intelligent surface device 13. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (PUE). The wearable device includes a smart watch, a wrist band, earphones, glasses, or the like. It should be noted that the terminal 11 is not limited to any specific type in the embodiments of this application.

The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN (Wireless Local Area Networks, WLAN) access point, a wireless fidelity (Wireless Fidelity, Wi-Fi) node, a transmission and reception point (Transmitting Receiving Point, TRP), a wireless access network node, or another appropriate term in the art. The base station is not limited to a specific technical term as long as the same technical effect is achieved. It should be noted that the base station in the NR system is taken merely as an example in the embodiments of this application, but the base station is not limited to any specific type.

The following describes in detail transmission methods and apparatus, a device, and a readable storage medium provided in the embodiments of this application by using some embodiments and application scenarios thereof with reference to the accompanying drawings.

Referring to FIG. 2, an embodiment of this application provides a transmission method. The method may be performed by a terminal, and specific steps include step 201.

Step 201. Perform a first behavior in a case that the terminal interested in a first service is within a first area.

The first behavior includes at least one of the following:
(1) Obtaining configuration information of the first service.
   For example, the first service is the local MBS service, and the terminal performs monitoring on information on broadcast control channel (Broadcast Control Channel, BCCH) and multicast control channel (Multiple CCH, MCCH) to obtain configuration information of the MBS service. The terminal obtains the configuration information of the local MBS service through dedicated RRC signaling, for example, first sending NAS signaling or an RRC message to the network to request the configuration information of the MBS service, and then obtaining the configuration information of the local MBS service through the dedicated RRC signaling.
(2) Entering an RRC connected state.
   It can be understood that the content in (2) above is applicable when the terminal is in an RRC-inactive state and an RRC-idle state.
(3) Sending non-access stratum (Non-Access-Stratum, NAS) signaling.
(4) Sending an RRC message.
(5) Receiving data of the first service.

For example, the data is user plane data of the local MBS service.

The terminal interested in the first service is a terminal that expects to receive the first service.

In an implementation of this application, the first area includes at least one of the following:
(1) Service area (service area) of the first service.
   For example, the service area is a service area of the local MBS service.
(2) Notification area of a wireless access network.
   It can be understood that the content in (2) above is applicable when the terminal is in a radio resource control (Radio Resource Control, RRC) inactive state (RRC-inactive state).
(3) Registration area (Registration Area, RA).
   It can be understood that the content in (3) above is applicable when the terminal is in an RRC-inactive state and an RRC-idle state (RRC-idle state).

In an implementation of this application, the step of performing a first behavior includes at least one of the following:
performing the first behavior in a case that the terminal enters the first area; and
performing the first behavior in a case that the terminal enters the first area and stays for a time exceeding a time limit.

In an implementation of this application, before the step of performing a first behavior in a case that the terminal interested in a first service is within a first area, the method further includes:
having received first information sent by a first network-side device;
   or
having not received the first information sent by the first network-side device.

In an implementation of this application, content in the first information includes at least one of the following:
(1) Indication of sending data of the first service.
(2) Indication of starting the first service.
   For example, the indication is session (session) start (start) of the local MBS service.
(3) Indication of resuming the first service.
   For example, the indication is session resume (resume) of the local MBS service.
(4) Indication of not sending data of the first service.
(5) Indication of suspending the first service.
   For example, the indication is session suspend (suspend) of the local MBS service.
(6) Indication of stopping the first service.
   For example, the indication is session stop (stop) of the local MBS service.
(7) Indication of deleting the first service.
   For example, the indication is session delete (delete) of the local MBS service.
(8) Identifier of the terminal.
(9) Identifier of the first service.
   For example, the service identifier is a temporary mobile group identity (Temporary Mobile Group Identity, TMGI) in a case that the first service is the local MBS service.
(10) Session identifier (session identifier).
(11) Paging indication.

For example, the paging indication is a wireless access network paging message (RAN paging message) such as a wireless access network paging message over the XN interface, or a core network paging message such as a core network paging message over the NG interface.

In an implementation of this application, the first network-side device includes at least one of the following:
(1) A base station located in the first area.
   For example, the base station is within a service area of the local MBS service.
(2) A base station located outside the first area.
   For example, the base station is outside a service area of the local MBS service.

In an implementation of this application, in a case that the first behavior includes entering the RRC connected state, the method further includes:
in a case that the terminal has not received data of a second service after entering the RRC connected state and that the terminal has received the first information, determining that the first information is used to indicate data sending, starting, or resuming of the first service.

For example, it is determined that the first information is used for indicating session start of the local MBS service or determined that the first information is used for indicating session resume of the local MBS service.

In an implementation of this application, the second service includes receiving data radio bearer (Data Radio Bearer, DRB) data through a protocol data unit (Protocol Data Unit, PDU) session.

In an embodiment of this application, the method further includes at least one of the following:
receiving second information sent by a second network-side device during the process of performing the first behavior; and
receiving the second information sent by the second network-side device after completing the first behavior.

In an implementation of this application, content in the second information includes at least one of the following:
(1) Indication of not sending data of the first service.
(2) Indication of suspending the first service.
   For example, the indication is session suspend of the local MBS service.
(3) Indication of stopping the first service.
   For example, the indication is session stop of the local MBS service.
(4) Indication of deleting the first service.
   For example, the indication is session delete of the local MBS service.
(5) Indication of sending data of the first service.
(6) Indication of starting the first service.
   For example, the indication is session (session) start of the local MBS service.
(7) Indication of resuming the first service.
   For example, the indication is session resume of the local MBS service.
(8) Indication of refusing to send the first service.
(9) Identifier of the terminal.
(10) Identifier of the first service.
   For example, the service identifier may be TMGI in a case that the first service is the local MBS service.
(11) Session identifier (session identifier).

In an implementation of this application, the second network-side device includes at least one of the following:
(1) A base station located in the first area.
   For example, the base station is within a service area of the local MBS service.
(2) A base station located outside the first area.

For example, the base station is outside a service area of the local MBS service.

In an implementation of this application, the method further includes:
refusing to perform the first behavior in a case that the terminal is outside the first area.

In this embodiment of this application, the terminal is capable of continuing to receive data of the first service after re-entering the service area of the first service, thereby achieving service continuity.

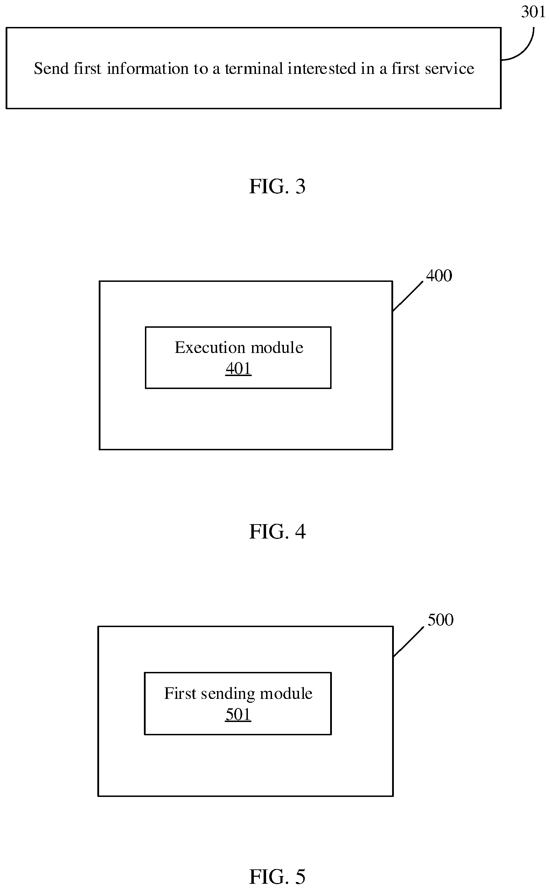

Referring to FIG. 3, an embodiment of this application provides a transmission method. The method may be performed by a network-side device, such as a first network-side device or a second network-side device, and specific steps include step 301.

Step 301. Send first information to a terminal interested in a first service.

Content in the first information includes at least one of the following:
(1) Indication of sending data of the first service.
(2) Indication of starting the first service.
   For example, the indication is session start of the local MBS service.
(3) Indication of resuming the first service.
   For example, the indication is session resume of the local MBS service.
(4) Indication of not sending data of the first service.
(5) Indication of suspending the first service.
   For example, the indication is session suspend of the local MBS service.
(6) Indication of stopping the first service.
   For example, the indication is session stop of the local MBS service.
(7) Indication of deleting the first service.
   For example, the indication is session delete of the local MBS service.
(8) Identifier of the terminal.
(9) Identifier of the first service.
   For example, the service identifier is a temporary mobile group identity (Temporary Mobile Group Identity, TMGI) in a case that the first service is the local MBS service.
(10) Session identifier.
(11) Paging indication.

For example, the paging indication is a RAN paging message such as a wireless access network paging message over the XN interface, or a core network paging message such as a core network paging message over the NG interface.

The network-side device is a first network-side device.

In an implementation of this application, the first network-side device includes at least one of the following:
(1) A base station located in the first area.
   For example, the base station is within a service area of the local MBS service.
(2) A base station located outside the first area.

For example, the base station is outside a service area of the local MBS service.

In an implementation of this application, the first area includes at least one of the following:
(1) Service area of the first service.
   For example, the service area is a service area of the local MBS service.
(2) Notification area of a wireless access network.
   It can be understood that the content in (2) above is applicable when the terminal is in an RRC-inactive state.
(3) Registration area.

It can be understood that the content in (3) above is applicable when the terminal is in an RRC-inactive state and an RRC-idle state.

In an implementation of this application, the method further includes:
sending second information to the terminal during a process of the terminal performing a first behavior within a first area;
   or
sending second information to the terminal after the terminal completes the first behavior within the first area; where
the network-side device is a second network-side device.

In an implementation of this application, content in the second information includes at least one of the following:
(1) Indication of not sending data of the first service.
(2) Indication of suspending the first service.
   For example, the indication is session suspend of the local MBS service.
(3) Indication of stopping the first service.
   For example, the indication is session stop of the local MBS service.
(4) Indication of deleting the first service.
   For example, the indication is session delete of the local MBS service.
(5) Indication of sending data of the first service.
(6) Indication of starting the first service.
   For example, the indication is session start of the local MBS service.
(7) Indication of resuming the first service.
   For example, the indication is session resume of the local MBS service.
(8) Indication of refusing to send the first service.
(9) Identifier of the terminal.
(10) Identifier of the first service.
   For example, the service identifier may be TMGI in a case that the first service is the local MBS service.
(11) Session identifier.

In an implementation of this application, the first behavior includes at least one of the following:
(1) Obtaining configuration information of the first service.
   For example, the first service is the local MBS service, and the terminal performs monitoring on information on BCCH and MCCH to obtain configuration information of the MBS service.
   The terminal obtains the configuration information of the local MBS service through dedicated RRC signaling, for example, first sending NAS signaling or an RRC message to the network to request the configuration information of the MBS service, and then obtaining the configuration information of the local MBS service through the dedicated RRC signaling.
(2) Entering an RRC connected state.
   It can be understood that the content in (2) above is applicable when the terminal is in an RRC-inactive state and an RRC-idle state.
(3) Sending NAS signaling.
(4) Sending an RRC message.
(5) Receiving data of the first service.
   For example, the data is user plane data of the local MBS service.

In an implementation of this application, the second network-side device includes at least one of the following:
(1) A base station located in the first area.
   For example, the base station is within a service area of the local MBS service.
(2) A base station located outside the first area.

For example, the base station is outside a service area of the local MBS service.

In this embodiment of this application, the network-side device may send first information to a terminal interested in a first service so that the terminal can continue to receive data of the first service after re-entering a service area of the first service, thereby achieving service continuity.

Referring to FIG. 4, an embodiment of this application provides a transmission apparatus, which is applied to a terminal. The apparatus 400 includes:
an execution module 401 configured for the terminal interested in a first service to perform a first behavior within a first area.

The first behavior includes at least one of the following:
(1) Obtaining configuration information of the first service.
   For example, the first service is the local MBS service, and the terminal performs monitoring on information on BCCH and MCCH to obtain configuration information of the MBS service.
   The terminal obtains the configuration information of the local MBS service through dedicated RRC signaling, for example, first sending NAS signaling or an RRC message to the network to request the configuration information of the local MBS service, and then obtaining the configuration information of the local MBS service through the dedicated RRC signaling.
(2) Entering an RRC connected state.
   It can be understood that the content in (2) above is applicable when the terminal is in an RRC-inactive state and an RRC-idle state.
(3) Sending NAS signaling.
(4) Sending an RRC message.
(5) Receiving data of the first service.

In an implementation of this application, the first area includes at least one of the following:
(1) Service area (service area) of the first service.
   For example, the service area is a service area of the local MBS service.
(2) Notification area of a wireless access network.
   It can be understood that the content in (2) above is applicable when the terminal is in an RRC-inactive state.
(3) RA.

It can be understood that the content in (3) above is applicable when the terminal is in an RRC-inactive state and an RRC-idle state.

For example, the service data is user plane data of the local MBS service.

In an implementation of this application, the execution module 401 is further configured to perform at least one of the following:
performing the first behavior in a case that the terminal enters the first area; and
performing the first behavior in a case that the terminal enters the first area and stays for a time exceeding a time limit.

In an implementation of this application, the apparatus 400 further includes a processing module configured to perform: having received first information sent by a first network-side device or having not received the first information sent by the first network-side device.

In an implementation of this application, content in the first information includes at least one of the following:
(1) Indication of sending data of the first service.
(2) Indication of starting the first service.
   For example, the indication is session start of the local MBS service.
(3) Indication of resuming the first service.
   For example, the indication is session resume of the local MBS service.
(4) Indication of not sending data of the first service.
(5) Indication of suspending the first service.
   For example, the indication is session suspend of the local MBS service.
(6) Indication of stopping the first service.
   For example, the indication is session stop of the local MBS service.
(7) Indication of deleting the first service.
   For example, the indication is session delete of the local MBS service.
(8) Identifier of the terminal.
(9) Identifier of the first service.
   For example, the service identifier is TMGI in a case that the first service is the local MBS service.
(10) Session identifier.
(11) Paging indication.

For example, the paging indication is a RAN paging message such as a RAN paging message over the XN interface, or a core network paging message such as a core network paging message over the NG interface.

In an implementation of this application, the first network-side device includes at least one of the following:
(1) A base station located in the first area.
   For example, the base station is within a service area of the local MBS service.
(2) A base station located outside the first area.

For example, the base station is outside a service area of the local MBS service.

In an implementation of this application, in a case that the first behavior includes entering the RRC connected state, the apparatus 400 further includes:
a determining module configured to determine, in a case that the terminal has not received data of a second service after entering the RRC connected state and that the terminal has received the first information, that the first information is used to indicate data sending, starting, or resuming of the first service.

For example, it is determined that the first information is used for indicating session start of the local MBS service or determined that the first information is used for indicating session resume of the local MBS service.

In an implementation of this application, the second service includes receiving DRB data through a PDU session.

In an implementation of this application, the apparatus 400 further includes a receiving module configured to perform at least one of the following: receiving second information sent by a second network-side device during the process of performing the first behavior, and receiving the second information sent by the second network-side device after completing the first behavior.

In an implementation of this application, content in the second information includes at least one of the following:
(1) Indication of not sending data of the first service.
(2) Indication of suspending the first service.
   For example, the indication is session suspend of the local MBS service.
(3) Indication of stopping the first service.
   For example, the indication is session stop of the local MBS service.
(4) Indication of deleting the first service.
   For example, the indication is session delete of the local MBS service.
(5) Indication of sending data of the first service.
(6) Indication of starting the first service.
   For example, the indication is session start of the local MBS service.
(7) Indication of resuming the first service.
   For example, the indication is session resume of the local MBS service.
(8) Indication of refusing to send the first service.
(9) Identifier of the terminal.
(10) Identifier of the first service.
   For example, the service identifier is TMGI in a case that the first service is the local MBS service.
(11) Session identifier.

In an implementation of this application, the second network-side device includes at least one of the following:
(1) A base station located in the first area.
   For example, the base station is within a service area of the local MBS service.
(2) A base station located outside the first area.

For example, the base station is outside a service area of the local MBS service.

In an implementation of this application, the apparatus 400 further includes a refusal module configured to refuse to perform the first behavior in a case that the terminal is outside the first area.

The transmission apparatus in this embodiment of this application may be an apparatus or electronic device with an operating system, or may be a component, an integrated circuit, or a chip in a terminal. The apparatus or electronic device may be a mobile terminal or a non-mobile terminal. For example, the mobile terminal may include but is not limited to the types of the terminal listed above, and the non-mobile terminal may be a server, a network attached storage (Network Attached Storage, NAS), a personal computer (Personal Computer, PC), a television (Television, TV), a teller machine, a self-service machine, or the like, which are not specifically limited in the embodiments of this application.

The apparatus provided in this embodiment of this application can implement the processes implemented in the method embodiment in FIG. 2, with the same technical effects achieved. To avoid repetition, details are not described herein again.

Referring to FIG. 5, an embodiment of this application provides a transmission apparatus, which is applied to a network-side device. The apparatus 500 includes:
a first sending module 501 configured to send first information to a terminal interested in a first service.

Content in the first information includes at least one of the following:
(1) Indication of sending data of the first service.
(2) Indication of starting the first service.
   For example, the indication is session start of the local MBS service.
(3) Indication of resuming the first service.
   For example, the indication is session resume of the local MBS service.
(4) Indication of not sending data of the first service.
(5) Indication of suspending the first service.
   For example, the indication is session suspend of the local MBS service.
(6) Indication of stopping the first service.
   For example, the indication is session stop of the local MBS service.
(7) Indication of deleting the first service.
   For example, the indication is session delete of the local MBS service;
(8) Identifier of the terminal.
(9) Identifier of the first service.
   For example, the service identifier is TMGI in a case that the first service is the local MBS service.
(10) Session identifier.
(11) Paging indication.

For example, the paging indication is a RAN paging message such as a wireless access network paging message over the XN interface, or a core network paging message such as a core network paging message over the NG interface.

The network-side device is a first network-side device.

In an implementation of this application, the first network-side device includes at least one of the following:
(1) A base station located in the first area.
   For example, the base station is within a service area of the local MBS service.
(2) A base station located outside the first area.
   For example, the base station is outside a service area of the local MBS service.

In an implementation of this application, the first area includes at least one of the following:
(1) Service area of the first service.
   For example, the service area is a service area of the local MBS service.
(2) Notification area of a wireless access network.
   It can be understood that the content in (2) above is applicable when the terminal is in an RRC-inactive state.
(3) Registration area.

It can be understood that the content in (3) above is applicable when the terminal is in an RRC-inactive state and an RRC-idle state.

In an implementation of this application, the apparatus 500 further includes a second sending module configured to send second information to the terminal during a process of the terminal performing the first behavior within the first area or send second information to the terminal after the terminal completes the first behavior within the first area.

The network-side device is a second network-side device.

In an implementation of this application, content in the second information includes at least one of the following:
(1) Indication of not sending data of the first service.
(2) Indication of suspending the first service.
   For example, the indication is session suspend of the local MBS service.
(3) Indication of stopping the first service.
   For example, the indication is session stop of the local MBS service.
(4) Indication of deleting the first service.
   For example, the indication is session delete of the local MBS service.
(5) Indication of sending data of the first service.
(6) Indication of starting the first service.
   For example, the indication is session start of the local MBS service.
(7) Indication of resuming the first service.
   For example, the indication is session resume of the local MBS service.
(8) Indication of refusing to send the first service.
(9) Identifier of the terminal.
(10) Identifier of the first service.
   For example, the service identifier may be TMGI in a case that the first service is the local MBS service.
(11) Session identifier.

In an implementation of this application, the first behavior includes at least one of the following:
(1) Obtaining configuration information of the first service.
   For example, the first service is the local MBS service, and the terminal performs monitoring on information on BCCH and MCCH to obtain configuration information of the MBS service.
   The terminal obtains the configuration information of the local MBS service through dedicated RRC signaling, for example, first sending NAS signaling or an RRC message to the network to request the configuration information of the MBS service, and then obtaining the configuration information of the local MBS service through the dedicated RRC signaling.
(2) Entering an RRC connected state.
   It can be understood that the content in (2) above is applicable when the terminal is in an RRC-inactive state and an RRC-idle state.
(3) Sending NAS signaling.
(4) Sending an RRC message.
(5) Receiving data of the first service.

For example, the data is user plane data of the local MBS service.

In an implementation of this application, the second network-side device includes at least one of the following:
(1) A base station located in the first area.
   For example, the base station is within a service area of the local MBS service.
(2) A base station located outside the first area.

For example, the base station is outside a service area of the local MBS service.

The transmission apparatus in this embodiment of this application may be an apparatus, or may be an apparatus or electronic device with an operating system, or may be a component, an integrated circuit, or a chip in a network-side device. The apparatus or electronic device may be a base station or another network-side device.

The apparatus provided in this embodiment of this application can implement the processes implemented in the method embodiment in FIG. 3, with the same technical effects achieved. To avoid repetition, details are not described herein again.

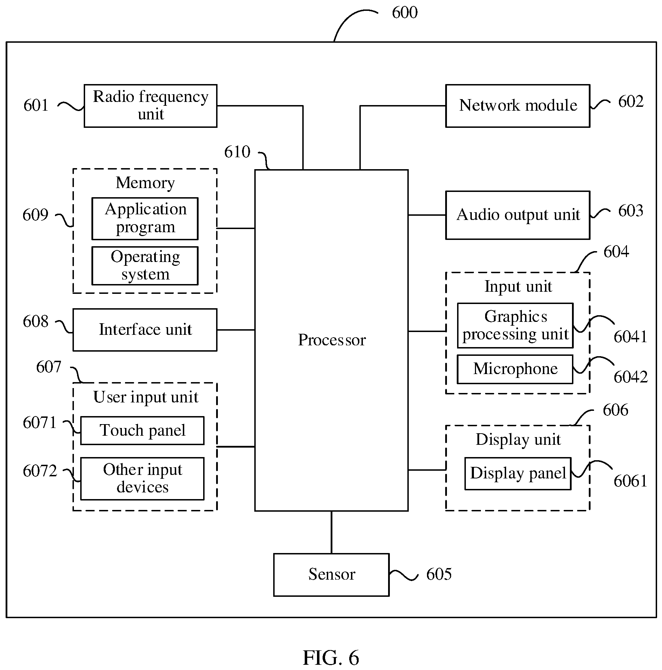

An embodiment of this application further provides a terminal, including a processor and a communication interface. The processor is configured for the terminal interested in a first service to perform a first behavior within a first area. This terminal embodiment corresponds to the terminal-side method embodiment above. The implementation processes and methods described in the above method embodiment are applicable to this terminal embodiment, with the same technical effect achieved. Specifically, FIG. 6 is a schematic structural diagram of hardware of a terminal for implementing the embodiments of this application. The terminal 600 includes but is not limited to components such as a radio frequency unit 601, a network module 602, an audio output unit 603, an input unit 604, a sensor 605, a display unit 606, a user input unit 607, an interface unit 608, a memory 609, and a processor 610.

It can be understood by those skilled in the art that the terminal 600 may further include a power supply (for example, a battery) supplying power to the components. The power supply may be logically connected to the processor 610 via a power management system, so that functions such as charge management, discharge management, and power consumption management are implemented by using the power management system. The structure of the terminal shown in FIG. 6 does not constitute any limitation on the terminal, and the terminal may include more or fewer components than shown in the figure, combine some of the components, or have different arrangements of the components. Details are not described herein.

It should be understood that in this embodiment of this application, the input unit 604 may include a graphics processing unit (Graphics Processing Unit, GPU) 6041 and a microphone 6042. The graphics processing unit 6041 processes image data of a static picture or a video that is obtained by an image capture apparatus (for example, a camera) in a video capture mode or an image capture mode. The display unit 606 may include a display panel 6061. The display panel 6061 may be configured in a form of a liquid crystal display, an organic light-emitting diode display, or the like. The user input unit 607 includes a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a functional button (such as a volume control button or a power on/off button), a trackball, a mouse, and a joystick. Details are not described herein.

In this embodiment of this application, the radio frequency unit 601 transmits downlink data received from a network-side device to the processor 610 for processing, and in addition, transmits uplink data to the network-side device. Generally, the radio frequency unit 601 includes but is not limited to an antenna, at least one amplifier, a transceiver, a coupler, a low noise amplifier, a duplexer, and the like.

The memory 609 may be configured to store software programs or instructions and various data. The memory 609 may include a program or instruction storage area and a data storage area. The program or instruction storage area may store an operating system, an application program or instructions required by at least one function (for example, a sound playback function or an image playback function), and the like. In addition, the memory 609 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other volatile solid-state storage devices.

The processor 610 may include one or more processing units. Optionally, an application processor and a modem processor may be integrated in the processor 610. The application processor primarily processes an operating system, user interfaces, application programs or instructions, and the like. The modem processor primarily processes radio communication, for example, being a baseband processor. It can be understood that the modem processor may alternatively be not integrated in the processor 610.

The terminal provided in this embodiment of this application can implement the processes implemented in the method embodiment in FIG. 2, with the same technical effects achieved. To avoid repetition, details are not described herein again.

An embodiment of this application further provides a network-side device, including a processor and a communication interface. The communication interface is configured to send first information to a terminal interested in a first service. This network-side device embodiment corresponds to the network-side device method embodiment above. The implementation processes and methods described in the above method embodiment are applicable to this network-side device embodiment, with the same technical effect achieved.

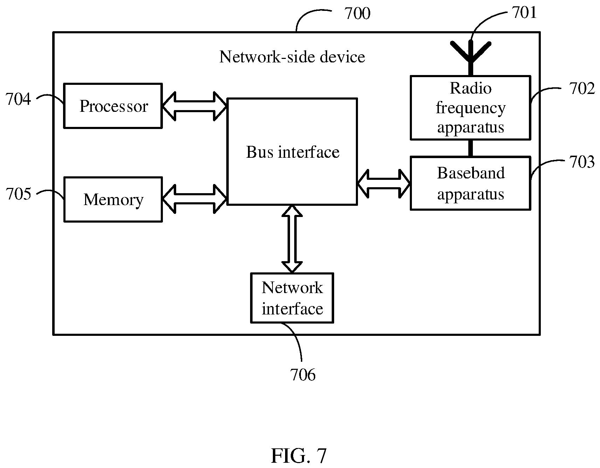

Specifically, an embodiment of this application further provides a network-side device. As shown in FIG. 7, the network-side device 700 includes an antenna 701, a radio frequency apparatus 702, and a baseband apparatus 703. The antenna 701 is connected to the radio frequency apparatus 702. In an uplink direction, the radio frequency apparatus 702 receives information by using the antenna 701 and sends the received information to the baseband apparatus 703 for processing. In a downlink direction, the baseband apparatus 703 processes to-be-sent information, and sends the information to the radio frequency apparatus 702; and the radio frequency apparatus 702 processes the received information and then sends the information out by using the antenna 701.

The frequency band processing apparatus may be located in the baseband apparatus 703. The method executed by the network-side device in the foregoing embodiments may be implemented in the baseband apparatus 703, and the baseband apparatus 703 includes a processor 704 and a memory 705.

The baseband apparatus 703 may include, for example, at least one baseband processing unit, where a plurality of chips are disposed on the baseband processing unit. As shown in FIG. 7, one of the chip, such as the processor 704, is connected to the memory 705, to invoke the program in the memory 705 to perform the operations of the network device shown in the foregoing method embodiment.

The baseband apparatus 703 may further include a network interface 706 configured to exchange information with the radio frequency apparatus 702, where the interface is, for example, a common public radio interface (Common Public Radio Interface, CPRI for short).

Specifically, the network-side device in this embodiment of this application further includes instructions or a program stored in the memory 705 and capable of running on the processor 704. The processor 704 invokes the instructions or program in the memory 705 to execute the method executed by the modules shown in FIG. 5, with the same technical effects achieved. To avoid repetition, details are not described herein again.

An embodiment of this application further provides a computer program product, where the computer program product is stored in a non-volatile storage medium, and the computer program product is executed by at least one processor to implement the steps of the processing method in FIG. 2 or FIG. 3.

An embodiment of this application further provides a readable storage medium. The readable storage medium may be non-transient. The readable storage medium stores a program or instructions. When the program or instructions are executed by a processor, the processes of the method embodiment in FIG. 2 or FIG. 3 are implemented, with the same technical effect achieved. To avoid repetition, details are not described herein again.

The processor is a processor in the terminal described in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions to implement the processes of the method embodiment in FIG. 3 or FIG. 4, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from that described, and various steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is an example implementation. Based on such an understanding, the technical solutions of this application essentially or the part contributing to the prior art may be implemented in a form of a computer software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A transmission method performed by a terminal, comprising:
performing a first behavior in a case that the terminal interested in a first service is within a first area; wherein
the first behavior comprises at least one of the following:
obtaining configuration information of the first service;
entering a radio resource control RRC connected state;
sending non-access stratum NAS signaling;
sending an RRC message; and
receiving data of the first service.

2. The method according to claim 1, wherein the first area comprises at least one of the following:
service area of the first service;
notification area of a wireless access network; and
registration area.

3. The method according to claim 1, wherein the step of performing a first behavior comprises at least one of the following:
performing the first behavior in a case that the terminal enters the first area; and
performing the first behavior in a case that the terminal enters the first area and stays for a time exceeding a time limit.

4. The method according to claim 1, wherein before the step of performing a first behavior in a case that the terminal interested in a first service is within a first area, the method further comprises one of the following:
having received first information sent by a first network-side device;
having not received the first information sent by the first network-side device.

5. The method according to claim 4, wherein content in the first information comprises at least one of the following:
indication of sending data of the first service;
indication of starting the first service;
indication of resuming the first service;
indication of not sending data of the first service;
indication of suspending the first service;
indication of stopping the first service;
indication of deleting the first service;
identifier of the terminal;
identifier of the first service;
session identifier; and
paging indication.

6. The method according to claim 4, wherein the first network-side device comprises at least one of the following:
a base station located in the first area; and
a base station located outside the first area.

7. The method according to claim 1, wherein in a case that the first behavior comprises entering the RRC connected state, the method further comprises:
in a case that the terminal has not received data of a second service after entering the RRC connected state and that the terminal has received the first information, determining that the first information is used to indicate data sending, starting, or resuming of the first service.

8. The method according to claim 7, wherein the second service comprises receiving data radio bearer DRB data through a protocol data unit PDU session.

9. The method according to claim 1, wherein the method further comprises at least one of the following:
receiving second information sent by a second network-side device during the process of performing the first behavior; and
receiving the second information sent by the second network-side device after completing the first behavior.

10. The method according to claim 9, wherein content in the second information comprises at least one of the following:
indication of not sending data of the first service;
indication of suspending the first service;
indication of stopping the first service;
indication of deleting the first service;
indication of sending data of the first service;
indication of starting the first service;
indication of resuming the first service;
indication of refusing to send the first service;
identifier of the terminal;
identifier of the first service; and
session identifier.

11. The method according to claim 9, wherein the second network-side device comprises at least one of the following:
a base station located in the first area; and
a base station located outside the first area.

12. The method according to claim 1, wherein the method further comprises:
refusing to perform the first behavior in a case that the terminal is outside the first area.

13. A transmission method performed by a network-side device, comprising:
sending first information to a terminal interested in a first service; wherein
content in the first information comprises at least one of the following:
indication of sending data of the first service;
indication of starting the first service;
indication of resuming the first service;
indication of not sending data of the first service;
indication of suspending the first service;
indication of stopping the first service;
indication of deleting the first service;
identifier of the terminal;
identifier of the first service;
session identifier; and
paging indication; wherein
the network-side device is a first network-side device.

14. The method according to claim 13, wherein the method further comprises:
sending second information to the terminal during a process of the terminal performing a first behavior within a first area;
or
sending second information to the terminal after the terminal completes the first behavior within the first area; wherein
the network-side device is a second network-side device.

15. The method according to claim 14, wherein content in the second information comprises at least one of the following:
indication of not sending data of the first service;
indication of suspending the first service;
indication of stopping the first service;
indication of deleting the first service;
indication of sending data of the first service;
indication of starting the first service;
indication of resuming the first service;
indication of refusing to send the first service;
identifier of the terminal;
identifier of the first service; and
session identifier.

16. The method according to claim 14, wherein the first behavior comprises at least one of the following:
obtaining configuration information of the first service;
entering a radio resource control RRC connected state;
sending non-access stratum NAS signaling;
sending an RRC message; and
receiving data of the first service.

17. The method according to claim 13 or 14, wherein the first network-side device or the second network-side device comprises at least one of the following:
a base station located in the first area; and
a base station located outside the first area.

18. The method according to claim 17, wherein the first area comprises at least one of the following:
service area of the first service;
notification area of a wireless access network; and
registration area.

19. A transmission apparatus applied to a terminal, comprising:
an execution module configured for the terminal interested in a first service to perform a first behavior within a first area; wherein
the first behavior comprises at least one of the following:
obtaining configuration information of the first service;
entering a radio resource control RRC connected state;
sending non-access stratum NAS signaling;
sending an RRC message; and
receiving data of the first service.

20. A transmission apparatus applied to a network-side device, comprising:
a first sending module configured to send first information to a terminal interested in a first service; wherein
content in the first information comprises at least one of the following:
indication of sending data of the first service;
indication of starting the first service;
indication of resuming the first service;
indication of not sending data of the first service;
indication of suspending the first service;
indication of stopping the first service;
indication of deleting the first service;
identifier of the terminal;
identifier of the first service;
session identifier; and
paging indication; wherein
the network-side device is a first network-side device.

21. A terminal, comprising a processor, a memory, and a program stored in the memory and capable of running on the processor, wherein when the program is executed by the processor, the steps of the method according to any one of claims 1 to 12 are implemented.

22. A network-side device, comprising a processor, a memory, and a program stored in the memory and capable of running on the processor, wherein when the program is executed by the processor, the steps of the method according to any one of claims 13 to 18 are implemented.

23. A readable storage medium, wherein the readable storage medium stores a program or instructions, and when the program or instructions are executed by a processor, the steps of the methods according to any one of claims 1 to 18 are implemented.

24. A chip, wherein the chip comprises a processor and a communication interface, the communication interface is coupled to the processor, and the processor is configured to run a program or instructions to implement the steps of the methods according to any one of claims 1 to 18.

25. A computer program product, wherein the computer program product is stored in a readable storage medium, and when the computer program product is executed by at least one processor, the steps of the methods according to any one of claims 1 to 18 are implemented.

26. A terminal, wherein the terminal is configured to perform the steps of the method according to any one of claims 1 to 12.

27. A network-side device, wherein the network-side device is configured to perform the steps of the method according to any one of claims 13 to 18.
